(19)

Europäisches
Patentamt
European
Patent Office
Office européen
des brevets

(11) **EP 4 516 882 A1**

(12) **EUROPEAN PATENT APPLICATION**

(43) Date of publication:
**05.03.2025 Bulletin 2025/10**

(21) Application number: **24170167.1**

(22) Date of filing: **15.04.2024**

(51) International Patent Classification (IPC):
*C10G 45/64* (2006.01)     *C10G 65/04* (2006.01)
*B01J 29/74* (2006.01)

(52) Cooperative Patent Classification (CPC):
**C10G 45/64; B01J 29/74; B01J 29/7461;**
**B01J 29/7484; B01J 29/7492; C10G 65/043;**
C10G 2/50; C10G 3/50; C10G 2300/1014;
C10G 2300/1022; C10G 2300/1081; C10G 2400/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.08.2023 KR 20230113116**

(71) Applicant: **SK Innovation Co., Ltd.**
**Seoul 03188 (KR)**

(72) Inventors:
• **LEE, Seung Woo**
**34124 Daejeon (KR)**
• **LEE, Chang Q**
**34124 Daejeon (KR)**
• **PARK, Young Moo**
**34124 Daejeon (KR)**
• **LIM, Sun Ju**
**34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **METHOD FOR PREPARING SUSTAINABLE AVIATION FUEL**

(57)     The present invention relates to a method of preparing sustainable aviation fuel (SAF). The method includes preparing renewable feedstocks and introducing the renewable feedstocks as a reactant into a hydroprocessing reaction in the presence of a catalyst, in which the catalyst includes a metal and zeolite, and the zeolite is a one-dimensional 10 membered-ring (1D 10MR) zeolite.

EP 4 516 882 A1

**Description**

BACKGROUND OF THE INVENTION

1. Field of the Invention

The present invention relates to a method for preparing sustainable aviation fuel (SAF).

2. Description of the Related Art

Aviation fuel is fuel used for aircraft engines. Aviation fuel is not very different from kerosene in terms of composition and is generally prepared by mixing various additives with kerosene fraction. Specifically, aviation fuel is prepared by processing low-volatility kerosene.

Anthropogenic carbon dioxide emissions have caused a greenhouse effect, leading to an increase in temperature, which in turn has given rise to climate change. Accordingly, to stop the increase in carbon dioxide concentration levels in the atmosphere, so-called "carbon neutrality" has recently been attracting attention. Carbon neutrality refers to making a practical emission zero by reducing anthropogenic emissions and increasing carbon dioxide absorption.

Sustainable aviation fuel (SAF) refers to aviation fuel made from sustainable and renewable raw materials. The raw materials may be bio-derived raw materials such as seaweed, plants and animals, and cooking oil, or may be synthetic raw materials prepared using carbon dioxide in the air and hydrogen derived from water.

SAF can replace conventional aviation fuel without modifying existing aircraft. SAF has the advantage of being able to reduce carbon emissions by up to 80% compared to conventional aviation fuel prepared based on fossil resources such as oil and coal. SAF is attracting attention as a solution not only from the perspective of depletion of existing fossil resources and increase in crude oil prices but also from the perspective of preventing global warming and reducing carbon dioxide emissions.

SUMMARY OF THE INVENTION

The present invention provides a method for preparing sustainable aviation fuel (SAF). The method includes the following steps:

> preparing renewable feedstocks, which are raw materials derived from carbon dioxide in the air, factory exhaust gases, or biological raw materials selected from vegetable oils, fats, grains, sugars, and wood; and
> introducing the renewable feedstocks as a reactant into a hydroprocessing reaction in the presence of a catalyst, wherein the catalyst includes metals and zeolite, wherein the zeolite is one-dimensional 10 membered-ring (1D 10MR) zeolite.

In one embodiment, wherein in the hydroprocessing reaction, the conversion of fractions having boiling points greater than an aviation fuel boiling point range, which is from 150 to 300°C measured by the ASTM D7500 method, is 50% or less.

In one embodiment, the renewable feedstocks have paraffin in an amount of at least 50% by weight based on the total weight of the renewable feedstocks and includes hydrocarbons having a carbon number of at least C 16.

In another embodiment, the hydroprocessing reaction includes a hydroisomerization reaction and a hydrocracking reaction.

In yet another embodiment, the metals include at least one selected from Group VIB metals and Group VIII metals in the periodic table. In one embodiment, the metal includes at least one selected from the group consisting of Fe, Ni, Mo, Co, W, Ru, Pt, and Pd, preferably one selected from the group consisting of Pt and Pd.

In yet another embodiment, the zeolite includes at least one selected from zeolites having TON, MTT, AEL, and MRE structures. In one embodiment, the zeolite is at least one selected from the group consisting of ZSM-22, ZSM-23, SAPO-11, EU-2, and ZSM-48.

In one embodiment, the catalyst comprises 0.1% to 2.0%, preferably 0.2% to 1.0% by weight of metal.

In yet another embodiment, the hydroprocessing reaction is performed under the following conditions: a temperature in a range of 200°C to 500°C; a hydrogen partial pressure in a range of 1 bar to 200 bar; a liquid hourly space velocity (LHSV) in a range of 0.1 $hr^{-1}$ to 10 $hr^{-1}$; and/or a hydrogen/reactant ratio in a range of 40 $Nm^3/m^3$ to 1800 $Nm^3/m^3$. Specifically, the hydroprocessing reaction may be performed under a temperature in a range of 200°C to 500°C, preferably 300°C to 400°C, and/or under a hydrogen partial pressure in a range of 1 bar to 200 bar, preferably 30 to 100 bar, and/or a liquid hourly space velocity (LHSV) in a range of 0.1 $hr^{-1}$ to 10 $hr^{-1}$, preferably 0.5 to 2.0 $hr^{-1}$, and/or a hydrogen/reactant ratio in a range of 40 $Nm^3/m^3$ to 1800 $Nm^3/m^3$, preferably 80 to 1500 $Nm^3/m^3$. In yet another

embodiment, the method includes recovering the fractions of the products of the hydroprocessing reaction, the fractions having boiling points within or lower than an aviation fuel boiling point range, which is from 150 to 300°C measured by the ASTM D7500 method. In addition, the recovering of the factions includes separating the fractions having boiling points lower than the aviation fuel boiling point range and fractions having boiling points within the SAF boiling point range.

In yet another embodiment, within the product of the hydroprocessing reaction, fractions having boiling points within an aviation fuel boiling point range, which is from 150 to 300°C measured by the ASTM D7500 method, and fractions having boiling points lower than the aviation fuel boiling point range satisfies the following relationship:

$$\Delta M/\Delta L \geq 100.$$

Herein, $\Delta M$ is the amount of change in the content of the fractions having boiling points within the aviation fuel boiling point range before and after the hydroprocessing reaction, and $\Delta L$ is the amount of change in the content of the fractions having boiling points lower than the aviation fuel boiling point range before and after the hydroprocessing reaction.

In yet another embodiment, the method includes recovering fractions of the products of the hydroprocessing reaction, the fractions having boiling points within or lower than the aviation fuel boiling point range. The recovering of the fractions further includes introducing the fractions into a hydroisomerization reaction.

In yet another embodiment, the method includes recycling fractions of the products of the hydroprocessing reaction as a reactant of the hydroprocessing reaction, the fractions having boiling points higher than the aviation fuel boiling point range.

The present invention provides a method for preparing sustainable aviation fuel (SAF). The method makes it possible to prepare aviation fuel from environmentally friendly feedstocks. Additionally, SAF prepared through the method can replace aviation fuel prepared from conventional fossil raw materials. In addition, it is possible to reduce carbon dioxide emissions into the atmosphere, which can be expected to suppress global warming caused by carbon dioxide emissions.

BRIEF DESCRIPTION OF THE DRAWINGS

FIG. 1 is a schematic process diagram of a SAF preparation method according to one embodiment;
FIG. 2 is a schematic process diagram of a SAF preparation method according to another embodiment;
FIGs. 3 and 4 are graphs of conversion versus selectivity for each catalyst, the graphs showing the results of experiments using n-hexadecane as a feed according to one experiment example; and
FIG. 5 is a graph of conversion versus $\Delta M/\Delta L$, the graph showing the results of experiments using FT synthetic oil as a feed according to another experimental example.

DESCRIPTION OF THE PREFERRED EMBODIMENTS

Hereinafter, the present invention will be described in detail with reference to the attached drawings.

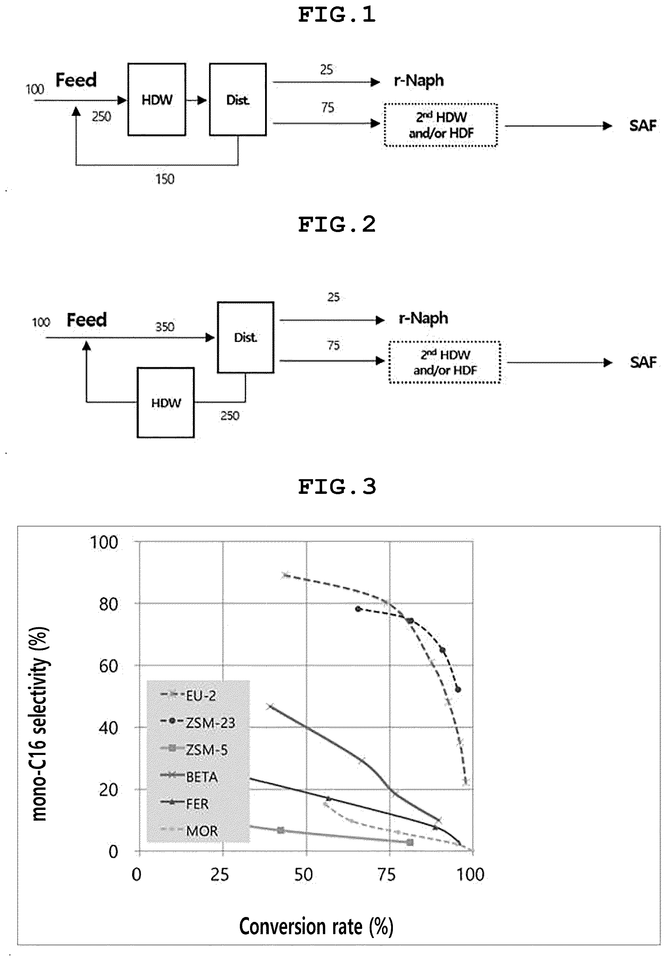

The present invention provides a method for preparing sustainable aviation fuel (SAF). FIGs. 1 and 2 each show a schematic process diagram for an SAF preparation method according to embodiments of the present invention. For reference, the figures shown in FIGs. 1 and 2 assume that the hydroprocessing reaction conversion of the fractions having boiling points higher than the SAF boiling point range was 40%. The SAF preparation method of the present invention can be understood with reference to FIGs. 1 and/or 2, but it should be noted that the method is not limited by the drawings. In FIGs. 1 and 2, "HDW" is an abbreviation for hydro-dewaxing reaction and can be used interchangeably with a hydroprocessing reaction including a hydrocracking reaction and a hydroisomerization reaction in the present disclosure. In addition, "HDF" is an abbreviation for hydro-finishing reaction, which can be performed to reduce the content of olefin within fractions and improve stability. In addition, "Dist." is an abbreviation for distillation, which can be performed for separation based on differences in boiling points of fractions.

The method includes preparing renewable feedstocks. In the present disclosure, "renewable feedstocks" refer to raw materials derived from carbon dioxide in the air, factory exhaust gases, or biological raw materials selected from vegetable oils, fats, grains, sugars, and wood. Renewable feedstocks are hence raw materials other than conventional fossil fuels or raw materials derived from thereof. These raw materials have little or no impact on the environment. Renewable feedstocks are expected to be a resource that can be used sustainably in the long term by replacing limited resources such as fossil raw materials.

The renewable feedstocks as used in a method of the present invention may include, for example, biomass-derived fatty acids, vegetable oil, animal oil, waste cooking oil, synthetic crude oil (syncrude) derived from the Fischer-Tropsch (FT) process, and FT-wax.

The reactant in the FT process is synthesis gas (syngas). In some embodiments, the syngas may be derived from water and carbon dioxide. Specifically, the syngas can be produced from hydrogen derived from water and carbon dioxide. More specifically, the hydrogen may be green hydrogen. "Green hydrogen" refers to hydrogen obtained through water electrolysis using renewable energy such as geothermal heat, wind power, and hydropower. Green hydrogen is assessed as environmentally friendly hydrogen because green hydrogen does not generate carbon dioxide during the production process.

Meanwhile, from the perspective of carbon neutrality, carbon dioxide may be carbon dioxide generated as a by-product of human production activities. Illustratively, the carbon dioxide may be captured carbon dioxide. Specifically, the carbon dioxide may be carbon dioxide subject to direct air capture (DAC) and/or carbon dioxide subject to point source carbon capture (PSC). Direct air capture is a method of separating and capturing carbon dioxide in the air. Direct air capture has the advantage of not being limited by location. Meanwhile, point source carbon capture is a method used in plants that generate carbon dioxide as a by-product, such as thermal power plants. Since carbon dioxide exists in high concentrations in these plants, carbon dioxide capture efficiency is excellent. In addition, point source carbon capture directly induces the reduction of carbon dioxide emitted into the atmosphere at the location where carbon dioxide is generated. Thus, in these respects, point source carbon capture is advantageous.

By using the syngas produced from the hydrogen and carbon dioxide obtained as described above as a reactant in the FT process, the FT process products can be used as renewable feedstocks in the method of the present invention.

The renewable feedstocks have a relatively high content of paraffin compared to conventional petrochemical oil. In some embodiments, the renewable feedstocks may contain paraffin in an amount of at least 50% by weight based on the total weight of the renewable feedstocks.

Specifically, the paraffin content of the renewable feedstocks may be at least 50% by weight, at least 55% by weight, at least 60% by weight, at least 65% by weight, at least 70% by weight, at least 75% by weight, or at least 80% by weight. In addition, the content may be in a range of 50% to 100% by weight, 55% to 100% by weight, 60% to 100% by weight, 65% to 100% by weight, 70% to 100% by weight, 80% to 100% by weight, 50% to 95% by weight, or 55% to 90% by weight, or any subrange in a range of the endpoints.

As used herein, the SAF boiling point range is 150°C to 300°C. The SAF includes hydrocarbons having boiling points in the relevant boiling range. Illustratively, the boiling point range of the fractions can be measured by the ASTM D7500 method.

SAF may include hydrocarbons having a carbon number of C8 to C16. The carbon number of SAF may also have various ranges slightly depending on the properties of the product required. For example, SAF may include hydrocarbons having a carbon number within the following carbon number ranges: C8 to C14, C9 to C16, and C10 to C15.

In another embodiment, the SAF may include hydrocarbons having a carbon number of C9 to C15, based on the total weight of the SAF. Specifically, the SAF may contain at least 90% by weight of hydrocarbons having a carbon number of C9 to C15. More specifically, the SAF may contain at least 95% by weight, more specifically at least 98% by weight, and even more specifically at least 99% by weight of hydrocarbons having a carbon number of C9 to C15. Most specifically, the SAF may be made of hydrocarbons having a carbon number of C9 to C15.

In the method of the present invention, a variety of renewable feedstocks, having a wide carbon number range, can be used. The renewable feedstocks may include hydrocarbons having boiling points lower than the SAF boiling point range described above; hydrocarbons having boiling points within the SAF boiling point range; or may contain hydrocarbons having boiling points higher than the SAF boiling point range. Specifically, in some embodiments, the renewable feedstocks may contain small amounts of hydrocarbons having a carbon number of less than C9. In yet another embodiment, the renewable feedstocks may include hydrocarbons having boiling points in the SAF boiling point range. In yet another embodiment, the renewable feedstocks may include hydrocarbons having boiling points higher than and equal to the SAF boiling point range.

Illustratively, the renewable feedstocks may include hydrocarbons having a carbon number of at least C16. Specifically, the renewable feedstocks may contain at least 90% by weight of hydrocarbons having a carbon number of at least C16 based on the total weight of the renewable feedstocks. More specifically, the renewable feedstocks may include at least 95% by weight, at least 96% by weight, at least 97% by weight, or at least 98% by weight hydrocarbons having a carbon number of at least.

Additionally, in some embodiments, the renewable feedstocks may include at least 90% by weight of hydrocarbons based on the total weight of the renewable feedstocks, the hydrocarbons having a boiling point of at least 300°C. More specifically, the renewable feedstocks may comprise at least 95% by weight, at least 96% by weight, at least 97% by weight, or at least 98% by weight of hydrocarbons having a boiling point of at least 300°C.

The method of the present invention includes the introduction of the above-described renewable feedstocks as a reactant into a hydroprocessing reaction in the presence of a catalyst. Here, "reactant" refers to the reactant of the hydroprocessing reaction. The above-described renewable feedstocks, which may contain hydrocarbons having a higher carbon number than SAF, can be converted to hydrocarbons having the same carbon number as SAF through the hydroprocessing reaction. The renewable feedstocks can also be upgraded to meet the specifications required as aviation fuel.

In one embodiment, the hydroprocessing reaction may include a hydro-isomerization reaction and a hydro-cracking reaction. The hydroisomerization reaction converts n-paraffins to isoparaffins. Due to the nature of aircraft operating at low temperatures and high altitudes, aviation fuel is required to have a low freezing point. Conversion of n-paraffin to iso-paraffin through the hydroisomerization reaction can contribute to improving the low-temperature performance of the final product.

Meanwhile, the hydrocracking reaction breaks hydrocarbon molecules into hydrocarbon molecules with a lower carbon number. In some embodiments, the hydrocarbons in the renewable feedstocks may have a carbon number of C5 to C120+. To obtain SAF having a carbon number of C9 to C15 from the renewable feedstocks, not only the hydroisomerization reaction but also the hydrocracking reaction is required.

In some other embodiments, the renewable feedstocks may include hydrocarbons having a carbon number of C16 to C20. To obtain SAF from the renewable feedstocks, the hydrocracking reaction is required. Additionally, cracking C16 to C20 hydrocarbons into C9 to C15 hydrocarbons requires a more delicate hydrocracking reaction than cracking C100 hydrocarbons to C9 to C15 hydrocarbons.

The hydroprocessing reaction is carried out in the presence of a catalyst. Specifically, the catalyst may be a bi-functional catalyst. The catalyst may include a carrier having acid sites for skeletal isomerization reactions, and metal for hydrogenation/dehydrogenation reactions. The catalyst may include metals and zeolite.

Specifically, the metals may include at least one metals selected from the group consisting of Group VIB metals and Group VIII metals in the periodic table. More specifically, the metals may include at least one metals selected from the group consisting of Fe, Ni, Mo, Co, W, Ru, Pt, and Pd. More specifically, the metals may include at least one metals selected from the group consisting of Pt and Pd.

According to the invention, the zeolite may be one-dimensional 10 membered-ring (1D 10MR) zeolite. 10MR zeolite has a pore size suitable for isomerizing and/or decomposing paraffin. Additionally, among 10MR zeolites, zeolites with a 1D pore structure are suitable for isomerization of n-paraffin. More specifically, the zeolite may include at least one zeolite selected from the group consisting of zeolites having TON, MTT, AEL, and MRE structures. More specifically, the zeolite may be at least one selected from the group consisting of zeolites having TON, MTT, AEL, and MRE structures. By way of example, the zeolite may include ZSM-22, ZSM-23, SAPO-11, EU-2, and ZSM-48.

The catalyst may comprise 0.1% to 2.0%, preferably 0.2% to 1.0% by weight of metal.

Accordingly, the catalyst may have higher selectivity for the hydroisomerization reaction than the selectivity for the hydrocracking reaction. In some embodiments, the selectivity for the hydroisomerization reaction during the hydrogenation reaction is higher than 0.5 but less than 1.0, such as higher than or equal to 0.6 but less than 1.0, higher than or equal to 0.7 but less than 1.0, higher than or equal to 0.75 but less than 1.0, higher than or equal to 0.8 but less than 1.0, or higher than or equal to 0.9 but less than 1.0, or any subrange in a range of the endpoints. The relatively high selectivity for this hydroisomerization reaction can contribute to increasing the yield of SAF and reducing the yield of fractions lighter than SAF, such as renewable naphtha (RN).

By using the catalyst as described above, the method of the present invention does not require separately performing the hydrocracking reaction using a separate catalyst. This does not require a separate reactor for the hydrocracking reaction, which can have a positive effect on reducing process equipment costs.

In one embodiment, the hydroprocessing reaction is performed under reaction conditions in which the conversion of the fractions having boiling points higher than the SAF boiling point range is lower than and equal to 50%. In the present disclosure, the "conversion of the fraction having boiling points higher than the SAF boiling point range" is expressed as a percentage by calculating (the amount of change in the content of fractions having boiling points higher than the SAF boiling point range before and after the hydroprocessing reaction) / (content of the fractions in the reactant, having boiling points higher than the SAF boiling point range, and to be introduced into the hydroprocessing reaction). Herein, the unit of the contents is % by weight. Specifically, the conversion is defined as follows.

conversion = 100 X (content of fractions in reactant of hydroprocessing reaction, having boiling points higher than SAF boiling point range - content of fractions in product of hydroprocessing reaction, having boiling points higher than SAF boiling point range) / (content of fractions in reactant of hydroprocessing reaction, having boiling points higher than SAF boiling point range).

As mentioned above, in yet another embodiment, the SAF may have its boiling point in the aviation fuel boiling point range, which is a range of 150°C to 300°C. Accordingly, the boiling points of the fractions higher than the aviation fuel / SAF boiling point range may be in a range of higher than 300°C. Additionally, the boiling point of the fractions lower than the aviation fuel / SAF boiling point range may be lower than 150°C.

In yet another embodiment, the conversion of the fractions having boiling points higher than the SAF boiling point range may be in a range of higher than 0% and less than or equal to 50%. Specifically, the conversion may be in a range of 1% to 50%, 5% to 50%, 10% to 50%, 20% to 50%, 30% to 50%, 40% to 50%, 1% to 40%, 5% to 40%, 10% to 40%, 20% to 40%, 30% to 40%, 1% to 30%, 5% to 30%, 10% to 30%, or 20% to 30%, or any subrange in a range of the endpoints. As will be described later, in the method of the present invention, the fractions having boiling points higher than the SAF boiling point range are recycled and reintroduced as a reactant in the hydroprocessing reaction. As the conversion is lower, the yield of the fractions having boiling point lower than the SAF boiling point range can be reduced.

The hydroprocessing reaction can be performed under conditions in which hydroisomerization selectivity is high and a conversion of the factions having boiling points higher than the SAF boiling point range is low. Using a catalyst with high hydroisomerization reaction selectivity under a low conversion of the fractions having boiling points higher than the SAF boiling point range can suppress the decomposition of the fractions having boiling points higher than and equal to the SAF boiling point into the fractions having boiling points lower than the SAF boiling point range. In some embodiments, the hydroprocessing reaction is performed under the following conditions: a temperature in a range of 200°C to 500°C; a hydrogen partial pressure in a range of 1 bar to 200 bar, liquid hourly space velocity (LHSV) in a range of 0.1 hr$^{-1}$ to 10 hr$^{-1}$; and/or a hydrogen/reactant ratio in a range of 40 Nm$^3$/m$^3$ to 1800 Nm$^3$/m$^3$.

Specifically, the temperature may be in a range of 200°C to 500°C, 250°C to 500°C, 300°C to 500°C, 200°C to 450°C, 250°C to 450°C, 300°C to 450°C, 200°C to 400°C, 250°C to 400°C, or 300°C to 400°C. More specifically, the temperature may be in a range of 300°C to 380°C. Even more specifically, the temperature may be in a range of 300°C to 360°C.

In addition, specifically, the hydrogen partial pressure may be in a range of 1 to 200 bar, 5 to 200 bar, 10 to 200 bar, 30 to 200 bar, 1 to 150 bar, 5 to 150 bar, 10 to 150 bar, 30 to 150 bar, 1 to 120 bar, 5 to 120 bar, 10 to 120 bar, 30 to 120 bar, 1 to 100 bar, 5 to 100 bar, 10 to 100 bar, or 30 to 100 bar. More specifically, the hydrogen partial pressure may be in a range of 30 to 90 bar. Even more specifically, the hydrogen partial pressure may be in a range of 30 to 80 bar.

Additionally, specifically, the LHSV may be in a range of 0.1 to 10 hr$^{-1}$, 0.1 to 8.0 hr$^{-1}$, 0.1 to 6.0 hr$^{-1}$, or 0.1 to 4.0 hr$^{-1}$. More specifically, the LHSV may be in a range of 0.1 to 3.0 hr$^{-1}$. Even more specifically, the LHSV may be in a range of 0.5 to 2.0 hr$^{-1}$.

Additionally, specifically, the hydrogen/reactant ratio may be in a range of 40 to 1800 Nm$^3$/m$^3$, 50 to 1600 Nm$^3$/m$^3$, 60 to 1500 Nm$^3$/m$^3$, or 80 to 1500 Nm$^3$/m$^3$. More specifically, the hydrogen/reactant ratio may be in a range of 100 to 1500 Nm$^3$/m$^3$. It should be noted that the hydroprocessing reaction conditions may vary depending on the type of catalysts used and the type of renewable feedstocks.

The method of the present invention includes recovering fractions of the product of the hydroprocessing reaction, the fractions having boiling points within or lower than the SAF boiling point range. Herein, the fractions having boiling points within or lower than the SAF boiling point range may include both the fractions having boiling points within the SAF boiling point range and the fractions having boiling points lower than the SAF boiling point range.

In some embodiments, out of the products of the hydroprocessing reaction, the fractions having boiling points within the SAF boiling point range and the fractions having boiling points lower than the SAF boiling point range may satisfy the following relationship:

$$\triangle M/\triangle L \geq 100.$$

Herein, $\triangle M$ is the amount of change in the content of fractions before and after the hydroprocessing reaction, the fractions having boiling points within the SAF boiling point range. In other words, $\triangle M$ means the amount of the fractions produced after the hydroprocessing reaction, the fractions having boiling points within the SAF boiling point range. In addition, $\triangle L$ is the amount of change in the content of fractions before and after the hydroprocessing reaction, the fractions having boiling points lower than the SAF boiling point range. In other words, $\triangle L$ means the amount of fractions produced after the hydroprocessing reaction, the fractions having boiling points lower than the SAF boiling point range.

Specifically, the ratio of $\triangle M/\triangle L$ may be in a range of 100 to 500, such as 100 to 110, 100 to 120, 100 to 130, 100 to 140, 100 to 150, 100 to 160, 100 to 170, 100 to 180, 100 to 190, 100 to 200, 100 to 300, and 100 to 400, or any subrange in a range of the above endpoints. More specifically, the ratio of $\triangle M/\triangle L$ may be in a range of 200 to 500. Even more specifically, the ratio of $\triangle M/\triangle L$ may be in a range of 300 to 500. The larger the value of the $\triangle M/\triangle L$ ratio, the lower the yield of the fractions having boiling points lower than the SAF boiling point range. Accordingly, the embodiments by the method of the present invention can be performed to achieve high values of $\triangle M/\triangle L$ ratio along with a low conversion of the fractions having boiling points higher than the SAF boiling point range.

In some embodiments, the recovering of fractions of the products of the hydroprocessing reaction, the fractions having boiling points within or lower than the SAF boiling point range may include separating the fractions having boiling points lower than the SAF boiling point range and fractions having boiling points within the SAF boiling point range. The fractions having boiling points lower than the SAF boiling point range may include RN fractions. The RN fractions can be recovered separately as needed. The recovered RN fractions can be used as a raw material for manufacturing known petrochemical products through a subsequent process. Additionally, the separated fractions having boiling points within the SAF boiling point range can be obtained as SAF through a subsequent process, if necessary.

In yet another embodiment, the recovering of fractions of the products of the hydroprocessing reaction, the fractions having boiling points within or lower than the SAF boiling point range may further include introducing the fractions into a hydroisomerization reaction. The hydroisomerization reaction is carried out separately from the hydroprocessing reaction described above. By removing n-paraffin remaining in the fractions through the hydroisomerization reaction, the low-temperature performance of the fractions can be further improved. The hydroisomerization reaction can be performed under known hydroisomerization reaction conditions. Illustratively, the hydroisomerization reaction may be performed under the hydroprocessing reaction conditions described above.

In yet another embodiment, the fractions of the products of the hydroprocessing reaction, the fractions having boiling points within or lower than the SAF boiling point may be separated into the fractions having boiling points lower than the SAF boiling point range and the fractions having boiling points within the SAF boiling point range, and only the separated fractions having boiling points within the SAF boiling point range can be introduced into the hydroisomerization reaction.

Additionally, in some embodiments, the recovering of the factions may further include introducing the fractions into a hydrofinishing reaction. In the hydrofinishing reaction, hydrogen is added to the fractions to remove aromatics in the fractions and saturate the olefin, thereby improving the stability of the fuel product against various conditions such as oxidation, heat, and UV. The hydrofinishing reaction can be performed under known reaction conditions.

Illustratively, the hydrofinishing reaction may be performed in the presence of a catalyst. The catalyst used in the hydrofinishing reaction includes at least one metals selected from the group consisting of group 6, group 8, group 9, group 10, and group 11 elements having a hydroprocessing function, specifically may be a sulfide of Ni-Mo, Co-Mo, or Ni-W metal, or a noble metal such as Pt or Pd.

Additionally, silica, alumina, silica-alumina, titania, zirconia, and zeolite may be used as a carrier of the catalyst, specifically, alumina and silica-alumina may be used.

Meanwhile, the method of the present invention includes recycling fractions of the products of the hydroprocessing reaction as a reactant of the hydroprocessing reaction, the fractions having boiling points higher than the SAF boiling point range. In yet another embodiment, the fractions having boiling points higher than the SAF boiling point range can be mixed with renewable feedstocks prior to the introduction thereof to the hydroprocessing reaction. In yet another embodiment, the fractions having boiling points higher than the SAF boiling point range can be introduced into the hydroprocessing reaction separately from the renewable feedstocks. In any case, it should be noted that the fractions which are in the reactants, have boiling points higher than the SAF boiling point range, and are to be introduced in the hydroprocessing reaction mentioned above in relation to the conversion are a total of the fractions having boiling points higher than the SAF boiling point range in the renewable feedstocks and the recycled fractions of the products of the hydroprocessing reaction, the fractions having boiling points higher than the boiling point range.

Referring to FIG. 2, in some embodiments, the preparation method may include separating the renewable feedstocks into the fractions having boiling points higher than the SAF boiling point range and the fractions having boiling points within or lower than the SAF boiling point range prior to the introduction thereof to the hydroprocessing reaction. In this example, only the fractions having boiling points higher than the SAF boiling point range can be introduced into the hydroprocessing reaction. The product of the hydroprocessing reaction can then be mixed with renewable feedstocks and introduced into the separation.

SAF can be prepared through the method described above. In yet another embodiment, the SAF may have a freezing point in a range of -40°C and below. The fractions having boiling points within the SAF boiling point range obtained through the method of the present invention can be mixed with separate additives as needed to meet the specifications as a commercially available aviation fuel.

Hereinafter, embodiments of the present invention will be further described with reference to specific experimental examples.

Example 1

1. Preparation of catalysts with high selectivity for hydroisomerization reaction

1-1. Preparation of catalysts for hydroprocessing reaction

Catalysts for hydroprocessing reactions containing various zeolite carriers were prepared. The catalysts differed only in the type of zeolite and were prepared using the same type and content of metals and the same preparation method. As the metals, 1% by weight of Pt metals in an aqueous solution state was used. As a metal carrier method for catalyst preparation, the incipient wetness impregnation method was used. As the zeolite carriers, BETA, ZSM-5, FER, MOR, ZSM-23, and EU-2 zeolites were used. Zeolite catalysts each with a content of 0.6% by weight of Pt were prepared.

1-2. Experiment to confirm selectivity of hydroprocessing reaction

As a model sample of renewable feedstocks with a high paraffin content, n-hexadecane (C16) was used as a reaction raw material in this experiment. Through a hydroprocessing reaction, normal hexadecane was isomerized into branched hexadecane (iso-C16) having the same carbon number of C16 as the reaction raw material, normal hexadecane, or was decomposed into low molecular weight hydrocarbons having a carbon number of lower than and equal to C15. iso-C16 could generally be classified into products with a monomethyl group (mono-C16), products with a dimethyl group (di-C16), and products with a trimethyl group (tri-C16), depending on the number of methyl groups. Herein, mono-C 16 was generally produced the most.

1 g of the previously prepared catalyst was placed in a continuous fixed bed reactor, and n-hexadecane and hydrogen were simultaneously supplied to the reactor to confirm the selectivity of products for each catalyst under the following reaction conditions.

[Table 1]

| Reaction conditions | Range |
|---|---|
| Reaction temperature (°C) | 260-350 |
| $H_2$ partial pressure (bar) | 30-80 |
| LHSV(hr$^{-1}$) | 1-2 |

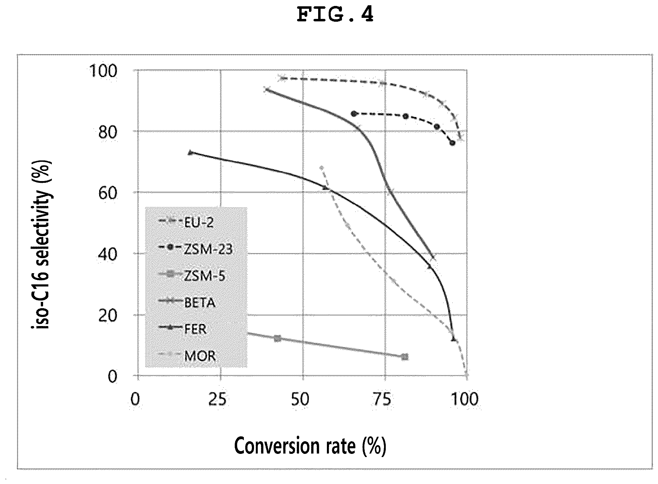

The experimental results were shown in terms of conversion versus selectivity depending on temperature change, as shown in FIGs. 3 and 4. The conversion in this experiment refers to a change in the amount of normal hexadecane, which is a reaction raw material, before and after the reaction. Normal hexadecane was converted to a reaction product over time and only a portion remained after the reaction was completed.

FIG. 3 shows the results showing the selectivity of mono-C 16 on the y-axis. The selectivity of mono-C 16 refers to the weight ratio of mono-C 16 to the total reaction product (which includes all hexadecane branched through hydro-isomerization reaction and low-molecular hydrocarbons with carbon numbers of lower than and equal to C15 through hydrocracking reaction) converted from normal hexadecane.

FIG. 4 shows the results showing the selectivity of iso-C16, which includes all mono-, di-, and tri-C16, on the y-axis. The selectivity of iso-C16 refers to the weight ratio of iso-C16 to the total reaction product.

In FIGs. 3 and 4, the closer to the right and upper the catalyst, the higher the selectivity for hydroisomerization reaction than hydrocracking reaction. As a result of the experiment, it was found that ZSM-23 and EU-2 zeolite catalysts with one-dimensional (1D) and 10 membered-ring (10MR) structures are suitable for the hydroisomerization reaction of n-paraffin.

2. Hydroprocessing reaction experiments of renewable feedstocks

2-1. Hydroprocessing reaction experiments by catalyst type

F-T synthetic oil produced through the F-T synthesis reaction of syngas was used as reaction raw materials, and a hydroprocessing reaction was performed using the previously prepared catalyst. The main composition of the F-T synthetic oil was paraffinic hydrocarbon, and the boiling point of the F-T synthetic oil was in a range of 150°C to 710°C (the synthetic oil had a wide carbon number range of C5 to C120).

The raw materials and catalyst were put into the autoclave-type reactor, and hydrogen was supplied to the autoclave-type reactor until the hydrogen partial pressure reached 30 bar. After that, the temperature of the reactor was increased to 200°C, and the temperature was raised to the reaction temperature while stirring the reactants at 500 rpm, and then a predetermined time for the reaction was maintained.

The experimental conditions and results are shown in Table 2 below.

[Table 2]

| | Feed | Experiment 1 | Experiment 2 | Experiment 3 |
|---|---|---|---|---|
| Catalyst | | Pt / EU-2 | Pt / ZSM-5 | Ni / Y zeolite |
| Pore structure | | 1D | 3D | 3D |
| Feed/Catalyst (g/g)/h | | 7.5 | 7.5 | 7.5 |
| Reaction temperature (°C) | | 350 | 350 | 350 |

(continued)

|  | Feed | Experiment 1 | Experiment 2 | Experiment 3 |
|---|---|---|---|---|
| Reaction time (h) |  | 2 | 2 | 2 |
| Content of Light fraction (wt%) | 0 | 8.4 | 40.7 | 45.2 |
| Content of Middle fraction (wt%) | 1.9 | 22.9 | 37.8 | 45.2 |
| Content of Heavy fraction (wt%) | 98.1 | 68.7 | 21.5 | 9.6 |
| Conversion of Heavy fraction (%) |  | 30.0 | 78.1 | 87.4 |
| ΔM/ΔL |  | 250 | 88 | 51 |

The content of the reaction raw materials and reaction products in each fraction was analyzed through SIMDIS analysis using the ASTM D7500 method. The same analysis method was used in the experiments described later. Herein, the light fraction refers to a fraction having a boiling point of lower than 150°C. The middle fraction refers to a fraction having a boiling point of higher than and equal to 150°C to lower than and equal to 300°C. The heavy fraction means the fraction whose boiling point is above 300°C. The conversion of the heavy fraction means the change in the content of the heavy fraction before and after the reaction divided by the content of the heavy fraction in the feed. ΔM/ΔL means the change in the amount of the intermediate fraction before and after the reaction divided by the change in the amount of the light fraction before and after the reaction.

Referring to Table 2, the feed before the reaction contained 98.1% by weight of heavy fraction having a boiling point range of 300°C to 710°C. Through the reaction, the heavy fraction in the feed was decomposed, the content of the heavy fraction decreased, and the content of the light fraction and middle fraction increased.

From Experiment 1, by satisfying both the conversion of the heavy fraction of less than and equal to 50% and ΔM/ΔL of higher than and equal to 100, it was possible to suppress the production of the light fraction and increase the production of the middle fraction that can be used to prepare SAF. It is expected that while maintaining the conversion of the heavy fraction and ΔM/ΔL in the above numerical range, the heavy fraction is separated and recycled from the reaction product and reintroduced into the hydroprocessing reaction, thereby the middle fraction can be obtained in higher yield while suppressing the production of the light fraction.

2-2. Hydroprocessing reaction experiment in continuous fixed bed reactor

A hydroprocessing reaction experiment was conducted in a continuous fixed bed reactor using the catalyst and reaction raw materials of Experiment 1 described above. Hydrogen was first supplied to a continuous fixed bed reactor loaded with catalysts, and then F-T synthetic oil was supplied.

The experimental conditions and results are shown in Table 3 below.

[Table 3]

|  | Feed | Experiment 4 |
|---|---|---|
| Catalyst |  | Pt / EU-2 |
| Pore structure |  | 1D |
| Reaction temperature (°C) |  | 330 |
| Reaction pressure (bar) |  | 30 |
| LHSV($h^{-1}$) |  | 0.5 |
| GOR(gas to oil ratio, $nm^3/m^3$) |  | 500 |
| Content of Light fraction (wt%) | 0 | 4.6 |
| Content of Middle fraction (wt%) | 1.9 | 26.7 |
| Content of Heavy fraction (wt%) | 98.1 | 68.7 |
| Conversion of Heavy fraction (%) |  | 30.0 |
| ΔM/ΔL |  | 539 |

The content of reaction raw materials and reaction products in each fraction was analyzed through SIMDIS analysis using the ASTM D7500 method. Referring to Table 3, similar to the results of Experiment 1, Experiment 4 also satisfied both the conditions of a conversion of heavy fraction of lower than and equal to 50% and $\Delta M/\Delta L$ of higher than and equal to 100, thereby it was possible to suppress the production of light fractions and increase the production of middle fractions that can be used to prepare SAF.

2-3. Hydroprocessing reaction experiments by reaction conditions

Using the catalyst previously used in Experiment 1, the content ratio of feeds and catalysts; reaction temperature; and experiments were performed with different reaction times.

The experimental conditions and results are shown in Table 4 below.

[Table 4]

|  | Feed | Experiment A | Experiment B | Experiment C | Experiment D | Experiment E | Experiment F |
|---|---|---|---|---|---|---|---|
| Feed/Catalyst (g/g)/h |  | 2.5 | 7.5 | 7.5 | 1.3 | 7.5 | 7.5 |
| Reaction temperature (°C) |  | 350 | 350 | 350 | 350 | 330 | 370 |
| Reaction time (h) |  | 2 | 2 | 2 | 12 | 2 | 2 |
| Content of Light fraction (wt%) | 0 | 9.4 | 8.4 | 8.1 | 45.4 | 2.9 | 17.8 |
| Content of Middle fraction (wt%) | 1.9 | 29.9 | 22.9 | 23.3 | 32.1 | 11.3 | 32.7 |
| Content of Heavy fraction (wt%) | 98.1 | 60.7 | 68.7 | 68.6 | 22.5 | 85.8 | 49.5 |
| Conversion of Heavy fraction (%) | of | 38.1 | 30.0 | 30.1 | 77.1 | 12.5 | 49.5 |
| $\Delta M/\Delta L$ |  | 297.9 | 250 | 264.2 | 66.5 | 324.1 | 173.0 |

Referring to Table 4, when the conversion of the heavy fraction increased by increasing the catalyst content and the reaction time as in experiment D, the production of the light fraction increased rather than that of the middle fraction. On the other hand, when the conversion of the heavy fraction was lowered to close to 10% as in experiment E, the production of the light fraction was further suppressed, and the production of the middle fraction was further increased. Accordingly, as shown in FIG. 1 and/or FIG. 2, it is expected that SAF can be prepared in higher yield by reintroducing the heavy fraction in the reaction product into the reaction under lower conversion of heavy fraction.

2-4. Experiment to confirm $\Delta M/\Delta L$ change depending on conversion of heavy fraction

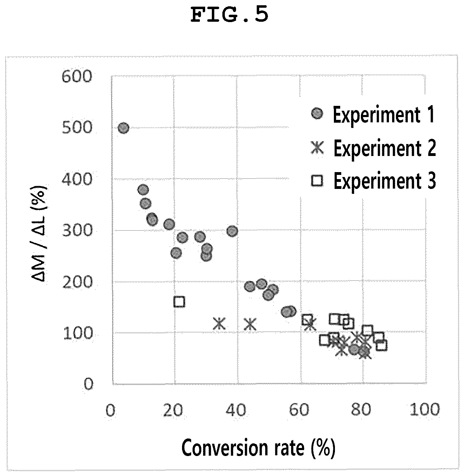

A hydroprocessing reaction was performed using the catalysts used in Experiments 1 to 3, respectively, and the reaction conditions varied to confirm the change tendency of $\Delta M/\Delta L$ depending on the change in conversion of heavy fraction. The results are shown in FIG. 5.

Referring to FIG. 5, $\Delta M/\Delta L$ tended to decrease as the conversion of the heavy fraction increased. In addition, using a zeolite catalyst with a 1D structure, such as the catalyst used in Experiment 1, resulted in a higher $\Delta M/\Delta L$ at a conversion of heavy fraction of lower than and equal to 50% than using a catalyst with a 3D structure used in Experiments 2 and 3. Using the zeolite catalyst with a 1D structure prepared SAF with a higher yield.

**Claims**

1. A method of preparing aviation fuel, the method comprising:

preparing renewable feedstocks, which are raw materials derived from carbon dioxide in the air, factory exhaust gases, or biological raw materials selected from vegetable oils, fats, grains, sugars, and wood; and

introducing the renewable feedstocks as a reactant into a hydroprocessing reaction in the presence of a catalyst, wherein the catalyst comprises a metal and zeolite, wherein the zeolite is one-dimensional 10 membered-ring (1D 10MR) zeolite.

2. The method of claim 1, wherein in the hydroprocessing reaction, the conversion of fractions having boiling points greater than an aviation fuel boiling point range, which is from 150 to 300°C measured by the ASTM D7500 method, is 50% or less.

3. The method of any preceding claim, wherein the renewable feedstocks comprise paraffin in an amount of at least 50% by weight based on the total weight of the renewable feedstocks and comprise a hydrocarbon having a carbon number of at least C16.

4. The method of any preceding claim, wherein the hydroprocessing reaction comprises a hydroisomerization reaction and a hydrocracking reaction.

5. The method of any preceding claim, wherein the metal comprises at least one selected from Group VIB metals and Group VIII metals in the periodic table, wherein the metal preferably includes at least one selected from the group consisting of Fe, Ni, Mo, Co, W, Ru, Pt, and Pd, and more preferably one selected from the group consisting of Pt and Pd.

6. The method of any preceding claim, wherein the zeolite comprises at least one selected from zeolites having TON, MTT, AEL, and MRE structures, wherein the zeolite preferably is at least one selected from the group consisting of ZSM-22, ZSM-23, SAPO-11, EU-2, and ZSM-48.

7. The method of any preceding claim, wherein the catalyst comprises 0.1% to 2.0%, preferably 0.2% to 1.0% by weight of metal.

8. The method of any preceding claim, wherein the hydroprocessing reaction is performed under a temperature in a range of 200°C to 500°C, preferably 300°C to 400°C.

9. The method of any preceding claim, wherein the hydroprocessing reaction is performed under a hydrogen partial pressure in a range of 1 bar to 200 bar, preferably 30 to 100 bar.

10. The method of any preceding claim, wherein the hydroprocessing reaction is performed under a liquid hourly space velocity (LHSV) in a range of $0.1 \text{ hr}^{-1}$ to $10 \text{ hr}^{-1}$, preferably 0.5 to $2.0 \text{ hr}^{-1}$.

11. The method of any preceding claim, wherein the hydroprocessing reaction is performed under a hydrogen/reactant ratio in a range of $40 \text{ Nm}^3/\text{m}^3$ to $1800 \text{ Nm}^3/\text{m}^3$, preferably 80 to $1500 \text{ Nm}^3/\text{m}^3$.

12. The method of any preceding claim, wherein the method further comprises recovering a fraction of the products of the hydroprocessing reaction, the fraction having a boiling point within or lower than an aviation fuel boiling point range, which is 150°C to 300°C measured by the ASTM D7500 method,
wherein the recovering of the faction comprises separating a fraction having a boiling point lower than the aviation fuel boiling point range and a fraction having a boiling point within the aviation fuel boiling point range.

13. The method of any preceding claim, within the product of the hydroprocessing reaction, a fraction having a boiling point within an aviation fuel boiling point range, which is 150°C to 300°C measured by the ASTM D7500 method, and a fraction having a boiling point lower than the aviation fuel boiling point range satisfies the following relationship:

$$\Delta M / \Delta L \geq 100,$$

wherein, $\Delta M$ is the amount of change in the content of the fractions having boiling points within the aviation fuel boiling point range before and after the hydroprocessing reaction, and $\Delta L$ is the amount of change in the content of the fractions having boiling points lower than the aviation fuel boiling point range before and after the hydroprocessing reaction.

14. The method of any preceding claim, wherein the method further comprises recovering a fraction of the products of the hydroprocessing reaction, the fraction having a boiling point within or lower than an aviation fuel boiling point range, which is 150°C to 300°C measured by the ASTM D7500 method,; and
the recovering of the fraction further comprises introducing the fraction into a hydroisomerization reaction.

15. The method of any preceding claim, wherein the method further comprises recycling a fraction of the products of the hydroprocessing reaction as a reactant of the hydroprocessing reaction, the fraction having a boiling point higher than the an aviation fuel boiling point range which is 150°C to 300°C measured by the ASTM D7500 method.

## FIG.1

## FIG.2

## FIG.3

FIG.4

## FIG.5

Europäisches
Patentamt

European
Patent Office

Office européen
des brevets

# EUROPEAN SEARCH REPORT

Application Number

EP 24 17 0167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/126562 A1 (NESTE OYJ [FI]) 6 July 2023 (2023-07-06) * example 1 * * figures 1-3 * * tables 1,2 * * claims 1-15 * | 1-15 | INV. C10G45/64 C10G65/04 B01J29/74 |
| X | WO 2023/154701 A1 (EXXONMOBIL TECHNOLOGY & ENGINEERING COMPANY [US]) 17 August 2023 (2023-08-17) * figure 1 * * claims 1-15 * * examples 1,2 * | 1-15 | |
| X | US 2023/250348 A1 (XU XIAOCHUN [US] ET AL) 10 August 2023 (2023-08-10) * figures 1,2 * * examples 1,2 * * claims 1-20 * * paragraph [0068] * | 1-15 | |
| X | EP 3 144 063 A1 (WUHAN KAIDI ENG TECH RES INST [CN]) 22 March 2017 (2017-03-22) * paragraphs [0001], [0008], [0009], [0039], [0040] * * examples * | 1-6 | TECHNICAL FIELDS SEARCHED (IPC) B01J C10G |
| A | US 2023/220284 A1 (HAID MICHAEL [DE] ET AL) 13 July 2023 (2023-07-13) * figure 1 * * paragraphs [0051], [0052], [0062], [0064] * * example * * claims 1-18 * | 1-15 | |

The present search report has been drawn up for all claims

| Place of search | Date of completion of the search | Examiner |
|---|---|---|
| The Hague | 12 September 2024 | Zuurdeeg, Boudewijn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.                    EP 24 17 0167

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | Publication date | Patent family member(s) | | Publication date |
|---|---|---|---|---|
| WO 2023126562 A1 | 06-07-2023 | FI | 20216356 A1 | 28-06-2023 |
| | | WO | 2023126562 A1 | 06-07-2023 |
| WO 2023154701 A1 | 17-08-2023 | US | 2023416619 A1 | 28-12-2023 |
| | | WO | 2023154701 A1 | 17-08-2023 |
| US 2023250348 A1 | 10-08-2023 | US | 2023250348 A1 | 10-08-2023 |
| | | WO | 2023154715 A1 | 17-08-2023 |
| EP 3144063 A1 | 22-03-2017 | AU | 2015258645 A1 | 12-01-2017 |
| | | CA | 2948943 A1 | 19-11-2015 |
| | | CN | 103949280 A | 30-07-2014 |
| | | EP | 3144063 A1 | 22-03-2017 |
| | | JP | 6337152 B2 | 06-06-2018 |
| | | JP | 2017521232 A | 03-08-2017 |
| | | KR | 20170005475 A | 13-01-2017 |
| | | RU | 2656598 C1 | 06-06-2018 |
| | | US | 2017056867 A1 | 02-03-2017 |
| | | WO | 2015172592 A1 | 19-11-2015 |
| US 2023220284 A1 | 13-07-2023 | CA | 3155106 A1 | 16-06-2022 |
| | | CN | 115175974 A | 11-10-2022 |
| | | EP | 4008760 A1 | 08-06-2022 |
| | | EP | 4031640 A1 | 27-07-2022 |
| | | ES | 2953388 T3 | 10-11-2023 |
| | | MA | 57216 B1 | 31-08-2023 |
| | | PL | 4031640 T3 | 09-10-2023 |
| | | US | 2023220284 A1 | 13-07-2023 |
| | | WO | 2022122663 A1 | 16-06-2022 |

EPO FORM P0459

For more details about this annex : see Official Journal of the European Patent Office, No. 12/82